# EUROPEAN PATENT SPECIFICATION

(11) **EP 1 733 656 B1**
(45) Date of publication and mention of the grant of the patent: **20.06.2012**
(21) Application number: 06253012.6
(22) Date of filing: 12.06.2006
(51) Int. Cl.: A47G 1/20

(54) **A hanger for support**
Aufhänger
Crochet de suspension

(30) Priority: 15.06.2005 NO 20052910
(43) Date of publication of application: 20.12.2006
(73) Proprietor: Pettersen, Thor Gunnar, 3023 Drammen (NO)
(72) Inventor: Pettersen, Thor Gunnar, 3023 Drammen (NO)
(74) Representative: Waldren, Robin Michael

(56) References cited:
- CH-A- 497 882
- GB-A- 190 928 289
- GB-A- 191 208 810
- US-A- 4 017 048
- US-A- 4 613 108

## Description

The present invention relates to a hanger for support on wall plates, preferably formed of gypsum wallboards or the like. The hanger is of a type which at one end is provided with attachment means intended to be hammered or forced into the wall plate, the attachment means comprises at least one, preferably three projecting attachment means. At its opposite end the hanger is provided with a hook portion. Said hook portion may for example be used for hanging pictures or the like on the wall.

It is previously known to use hangers, for example for hanging pictures or the like on walls, wherein the hanger is attached to the wall by means of an inclined central pin. Such hangers are well suited for use in connection with wooden walls or a wall made of chipboards or pressed wallboards. Such type of hangers is less suitable, however, for use in connection with gypsum wallboards.

Further, for supporting heavier pictures or products, it is known to employ expansion bolts or plugs in gypsum wallboards, inserted into pre-drilled holes, establishing an expansion on the blind side of the gypsum wallboard. The drawbacks with such bolts and appliances are that holes must be made in the wall, causing un-aesthetic holes in the wall when the bolts subsequently are removed.

CH 497 882 discloses a suspension hook suitable for supporting loads of 2 to 3kg. The hook includes a pair of triangular teeth that are angled with respect to the horizontal and which can be driven into the wall, a face plate arranged to lie flush against the wall, and a hook portion for suspending an object.

According to the present invention, a hanger for attachment to a wallboard, preferably made of gypsum or the like, comprising an intermediate flat plate portion being at one end provided with attachment means intended to be forced into the wallboard, the attachment means comprises attachment tooth elements, and where the intermediate flat plate portion at its opposite end is provided with a hook shaped body for suspension of objects, the hook shaped body comprises a substantially flat and straight portion positioned adjacent the flat plate portion and a bent hook portion, wherein the hanger in unattached state has a substantially "S"-formed shape, the attachment means having a substantially straight portion, the flat plate portion forming an angle of approximately 90° with the attachment means and a blunt angle with the flat and straight portion, such that the blunt angle is straightened out during mounting or pressing the attachment means into the wallboard, wherein there are three tooth elements of which the two wing tooth elements have a sabre shape, such that the two wing tooth elements will be bended sidewise when the hanger is attached to a wallboard, and the foot of each wing tooth element is provided with an indent to enhance the sidewise bending of the wing tooth elements.

The hanger of the present invention may provide safe and proper attachment to the wall, wherein even a small hanger can carry large loads when applied in walls made of gypsum wallboards, without losing its grip in the wallboard.

The hanger may easily be mounted and removed without leaving un-aesthetical and unattractive holes or dents in the wall.

In a preferred embodiment a hanger may be provided with small dimensions, which in attached state on a gypsum wallboard, may support bodies with a weight exceeding 25 kg without losing the grip in the gypsum wallboard, and that no un-aesthatical or detrimental marks or holes are left in the wall subsequent to removal of the hanger.

A preferred embodiment of the invention shall be described below, referring to the drawings, wherein:
Figure 1 shows in perspective a preferred embodiment of the invention;
Figure 2 shows the first stage in the process of attaching the hanger in a wallboard;
Figure 3 shows the final stage in the process of attaching the hanger according to the invention;

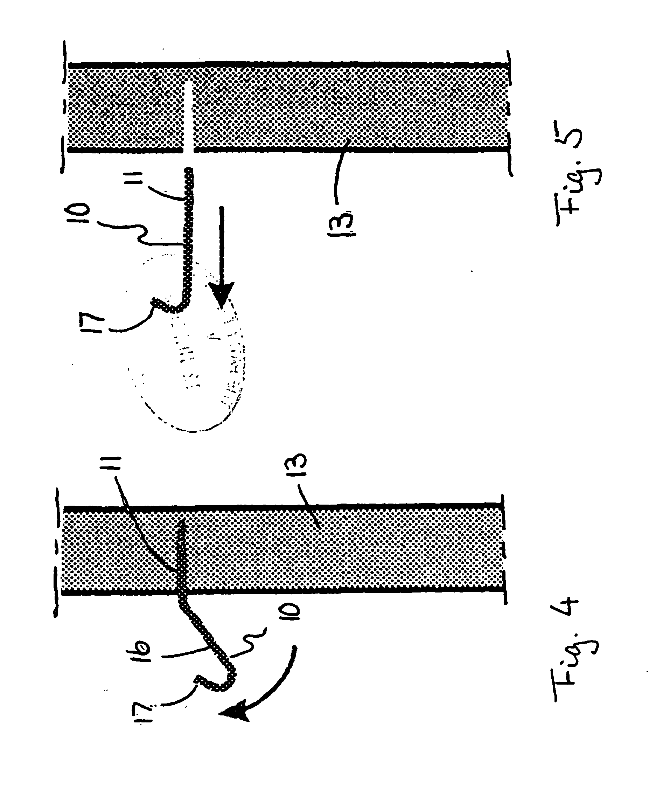

Figure 4 shows the first stage in the process of removing the hanger according to the invention; and
Figure 5 shows the final stage in the process of removing the hanger.

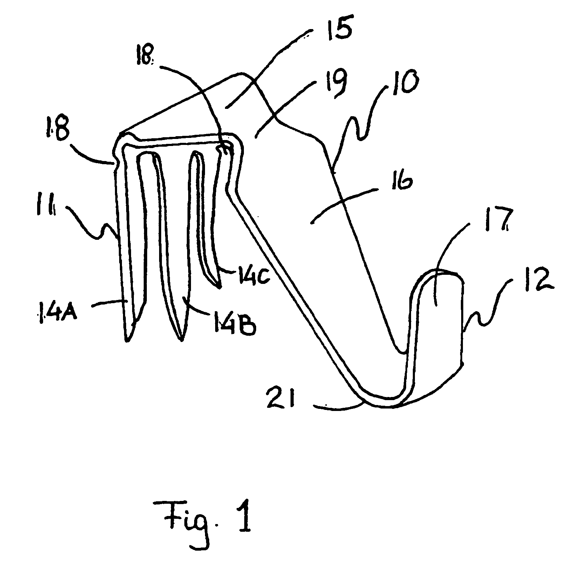

Figure 1 shows a preferred embodiment of a hanger 10. The hanger 10 comprises an attachment means 11 and a hook body 12. In the drawing, the hanger 10 is shown in a view illustrating the shape of the hanger prior to attachment to a wallboard 13. As shown the hanger 10 has in such phase a more or less "S"-formed shape, obtained by giving the attachment means 11 the form of a flat fork shaped part, the fork part preferably being formed by three tooth elements 14A-14C, of which the tooth elements 14A and 14C having a sabre shape in order to provide a better grip in the gypsum wallboard; an intermediate flat portion 15 arranged perpendicular with respect to the attachment means; and a flat portion 16 formed at a blunt angle with the flat portion 15 and which at its free end is bent to form a hooked portion 17.

As indicated in Figure 1 the middle tooth body 14B extends beyond the end of the remaining two wing tooth elements 14A, 14C. The two wing tooth elements 14A,14C will be pressed sidewise and outwards when the hanger is attached to the wallboard 13. Hence, a good attachment of the hanger 10 in the wallboard 13 is obtained. In order to enhance the sidewise bending of the wing tooth elements 14A,14C, the foot of each wing tooth element 14A,14C is provided with an indent 18. The indent 18 may be positioned at the foot, either on the inner or the outer side of each wing tooth element 14A,14C. As further indicated in Figure 1, the middle tooth element 14B may be somewhat longer than the wing tooth elements 14A,14C.

The transition between the flat surface 15 and the flat straight surface 16 is also provided with indents, positioned at the ends of the intended bending line 19. According to the preferred embodiment shown in Figure 1 the wakening bending line 19 is obtained by giving the weakened area reduced volume of material compared to the volume of material in the two adjacent areas 15,16. The embodiment shown in the figure is for this purpose provided with indents, the side edges of the flat plate part 15 being tapered inwards towards each other and towards the weakening bending line 19 and outwards from said line towards the straight portion 16.

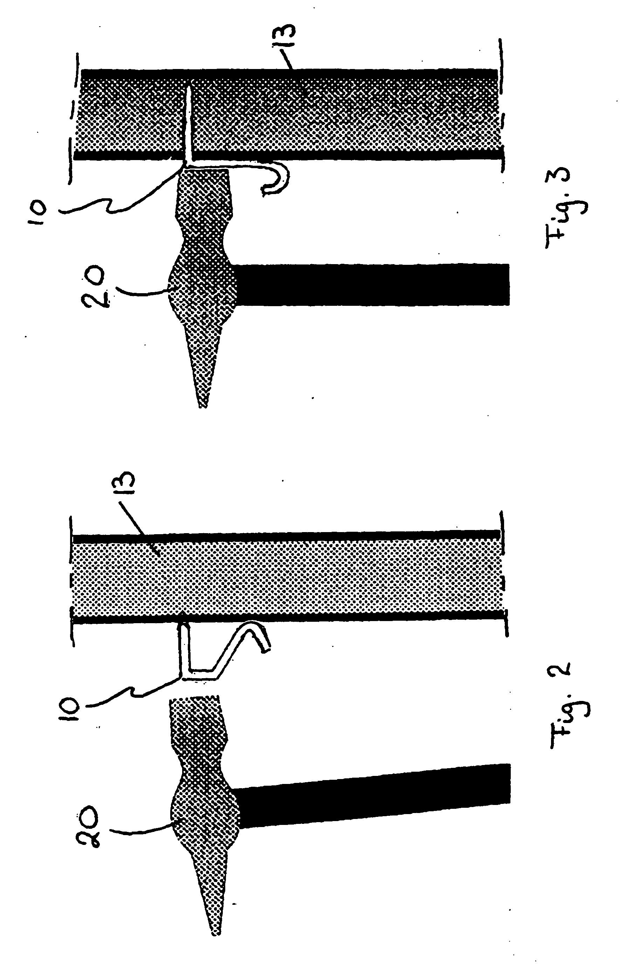

Figure 2 shows the hanger 10 in a position prior to attachment to the wallboard 13, while Figure 3 shows the hanger subsequent to completed attachment to the wallboard 13. As indicated a hammer is used for the attachment process. In the initial phase of the attachment process the middle tooth 14B is pressed into the wallboard 13 until the two remaining wing tooth elements 14A,14C also get into contact with the wallboard 13. At this stage of the attachment operation both the ends of the tooth elements 14 and the bent portion 21 between the straight part 16 and the bent part of the hook part 17 will rest against the surface of the wallboard 13. This will enhance the attachment of the hanger 10 to the wallboard 13, whereby the hammer easily may be employed for hitting the surface of the intermediate hook portion 15, forcing the tooth elements 14 into the wallboard. During this part of the operation the straight part 16 of the hanger will be bent, straightening out about the transverse bending line 19 and resulting in a shape as shown in Figure 3, i.e. resulting in a substantially "J"-formed shape with the attachment tooth elements 14 penetrated completely into the wallboard 13.

In order to remove the hanger 10 from the wallboard 13, the straight part 16 with the bent hook part 17 is bent upwards, for example by applying a screw driver or similar tools, until the hanger body 10 is projecting more or less perpendicular out of the wallboard 13. The straightened part of the hanger body 10 may then easily pulled out by hand or applying any tool suitable for such operation.

According to the disclosed embodiment the weakening part 19 in the transition zone between the flat plate surface 15 and the straight part 16 may be formed by the lateral constriction of material. It should be appreciated, however, that the weakened part 19 also may be obtained in different ways, for example by making a laterally extending weakening line instead of or in addition to said constriction. It should be ensured, however, that the weakening line in the hook is dimensioned in such way that the material failure is avoided when the hook is forced into the wallboard 13 or when the hanger 10 is bent for removal.

Although the hanger 10 is particularly suited for use in connection with attachment to wallboards, for example made of gypsum, it should be appreciated that the hanger also may be attached to other types of wall surfaces and for other purposes than functioning as hook for pictures, paintings or the like.

## Claims

1. A hanger (10) for attachment to a wallboard (13), preferably made of gypsum or the like, comprising an intermediate flat plate portion (15) being at one end provided with attachment means (11) intended to be forced into the wallboard (13), the attachment means (11) comprises attachment tooth elements (14A,14B,14C), and where the intermediate flat plate portion (15) at its opposite end is provided with a hook shaped body (12) for suspension of objects, the hook shaped body (12) comprises a substantially flat and straight portion (16) positioned adjacent the flat plate portion (15) and a bent hook portion (17), wherein the hanger (10) in unattached state has a substantially "S"-formed shape, the attachment means (11) having a substantially straight portion, the flat plate portion (15) forming an angle of approximately 90° with the attachment means and a blunt angle with the flat and straight portion (16), such that the blunt angle is straightened out during mounting or pressing the attachment means (14) into the wallboard, **characterised in that**:
there are three tooth elements (14A,14B,14C) of which the two wing tooth elements (14A,14C) have a sabre shape, such that the two wing tooth elements (14A,14C) will be bended sidewise when the hanger is attached to a wallboard (13), and the foot of each wing tooth element (14A,14C) is provided with an indent (18) to enhance the sidewise bending of the wing tooth elements (14A,14C).

2. A hanger (10) according to claim 1, wherein the transition between the flat plate portion (15) and the hook shaped body (12) includes a weakened part (19).

3. A hanger (10) according to claim 2, wherein the weakened part (19) is configured to enhance bending of the hanger (10) during attachment to the wallboard (13).

4. A hanger (10) according to claim 2 or 3, wherein the weakened part (19) is formed by the hook shaped body (12) provided with a portion having reduced material cross sectional area.

5. A hanger (10) according to any one of claims 2 to 4, wherein the weakened part (19) is in the form of a weakened line extending transverse with respect to the longitudinal direction of the hanger (10).

6. A hanger (10) according to any one of the preceding claims, wherein the flat plate portion (15) is intended to function as an impact surface when mounting the hanger (10) on the wallboard (13).

7. A hanger (10) according to any one of the preceding claims, wherein the middle tooth element (14B) is longer than the remaining two wing tooth elements (14A, 14C), whereby the middle tooth element (14B) functions as a guiding pin when mounting the hook (10) on the wallboard (13).

8. A hanger (10) according to any one of the preceding claims, wherein the hanger (10) is configured in such way that the flat plate portion (15) more or less is arranged in parallel with the wallboard (13) in the initial phase of the installation process.

## Patentansprüche

1. Aufhänger (10) zum Befestigen an einer Wandtafel (13), die vorzugsweise aus Gips oder ähnlichem hergestellt ist, umfassend einen intermediären flachen Plattenabschnitt (15), der an einem Ende mit einem Befestigungsmittel (11) versehen ist, das dazu bestimmt ist, in die Wandtafel (13) gedrückt zu werden, wobei das Befestigungsmittel (11) Befestigungszahnelemente (14A, 14B, 14C) umfasst, und wobei der intermediäre flache Plattenabschnitt (15) an seinem entgegengesetzten Ende mit einem hakenförmigen Körper (12) versehen ist, um Gegenstände aufzuhängen, wobei der hakenförmige Körper (12) einen im Wesentlichen flachen und geraden Abschnitt (16) umfasst, der angrenzend an den flachen Plattenabschnitt (15) und einen gebogenen Hakenabschnitt (17) positioniert ist, wobei der Aufhänger (10), in seinem unbefestigten Zustand, im Wesentlichen "S"-förmig ist, wobei das Befestigungsmittel (11) einen im Wesentlichen geraden Abschnitt aufweist, wobei der flache Plattenabschnitt (15) einen Winkel von ungefähr 90° mit dem Befestigungsmittel und einen stumpfen Winkel mit dem flachen und geraden Abschnitt (16) bildet, so dass der stumpfe Winkel beim Anbringen oder Pressen des Befestigungsmittels (11) an der/die Wandtafel gerade gebogen wird, **dadurch gekennzeichnet, dass**:
drei Zahnelemente (14A, 14B, 14C) vorhanden sind, von denen die zwei seitlichen Zahnelemente (14A, 14C) säbelförmig sind, so dass die zwei seitlichen Zahnelemente (14A, 14C) seitwärts gebogen werden, wenn der Aufhänger an einer Wandtafel (13) befestigt wird, und der Fuß jedes seitlichen Zahnelements (14A, 14C) mit einer Einkerbung (18) versehen ist, um das seitwärtse Biegen der seitlichen Zahnelemente (14A, 14C) zu verbessern.

2. Aufhänger (10) nach Anspruch 1, wobei der Übergang zwischen dem flachen Plattenabschnitt (15) und dem hakenförmigen Körper (12) einen geschwächten Teil (19) einschließt.

3. Aufhänger (10) nach Anspruch 2, wobei der geschwächte Teil (19) konfiguriert ist, um ein Biegen des Aufhängers (10) beim Befestigen an der Wandtafel (13) zu verbessern.

4. Aufhänger (10) nach Anspruch 2 oder 3, wobei der geschwächte Teil (19) durch den hakenförmigen Körper (12), der mit einem Abschnitt mit einem verjüngten Materialquerschnittsbereich gebildet wird.

5. Aufhänger (10) nach einem der Ansprüche 2 bis 4; wobei der geschwächte Teil (19) die Form einer geschwächten Linie, die sich schräg in Bezug auf die Längsrichtung des Aufhängers (10) erstreckt.

6. Aufhänger (10) nach einem der vorhergehenden Ansprüche, wobei der flache Plattenabschnitt (15) dazu bestimmt ist, als Prallwand zu fungieren, wenn der Aufhänger (10) an der Wandtafel (13) angebracht wird.

7. Aufhänger (10) nach einem der vorhergehenden Ansprüche, wobei das mittlere Zahnelement (14B) länger ist als die übrigen zwei seitlichen Zahnelemente (14A, 14C), wodurch das mittlere Zahnelement (14B) als Führungsstift fungiert, wenn der Haken (10) an die Wandtafel (13) angebracht wird.

8. Aufhänger (10) nach einem der vorhergehenden Ansprüche, wobei der Aufhänger (10) so konfiguriert ist, dass der flache Plattenabschnitt (15) mehr oder weniger parallel zu der Wandtafel (13) in der Ausgangsphase des Installationsverfahrens angeordnet ist.

## Revendications

1. Crochet de suspension (10) à fixer sur un panneau de mur (13), fait de préférence en gypse ou un analogue, comprenant une partie de plaque plate intermédiaire (15) équipée à une extrémité d'un moyen de fixation (11) destiné à être forcé dans le panneau de mur (13), le moyen de fixation (11) comprenant des éléments de dents de fixation (14A, 14B, 14C), la partie de plaque plate intermédiaire (15) étant équipée à son extrémité opposée d'un corps en forme de crochet (12) pour suspendre des objets, le corps en forme de crochet (12) comprenant une partie substantiellement plate et droite (16) positionnée de façon adjacente à la partie de plaque plate (15) et une partie de crochet replié (17), le crochet (10) dans l'état non fixé a une forme substantiellement en "S", le moyen de fixation (11) comportant une partie substantiellement droite, la partie de plaque plate (15) formant un angle d'approximativement 90° avec le moyen de fixation et un angle obtus avec la partie plate et droite (16), de sorte que l'angle obtus est redressé lors du montage ou du forçage du moyen de fixation (11) dans le panneau de mur, **caractérisé par**:
trois éléments de dent (14A, 14B, 14C) dont les deux éléments de dent latéraux (14A, 14C) ont une forme en sabre, de sorte que les deux éléments de dent latéraux (14A, 14C) seront pliés sur le côté lorsque le crochet de suspension est fixé à un panneau de mur (13), et la base de chaque élément de dent latéral (14A, 14C) est équipée d'un renfoncement (18) pour améliorer le fléchissement latéral des éléments de dent latéraux (14A, 14C).

2. Crochet de suspension (10) selon la revendication 1, dans lequel la transition entre la partie de plaque plate (15) et le corps en forme de crochet (12) inclut une partie affaiblie (19).

3. Crochet de suspension (10) selon la revendication 2, dans lequel la partie affaiblie (19) est configurée pour améliorer le fléchissement du crochet de suspension (10) durant sa fixation au panneau de mur (13).

4. Crochet de suspension (10) selon la revendication 2 ou 3, dans laquelle la partie affaiblie (19) est formée par le corps en forme de crochet (12) équipé d'une partie ayant une section transversale de matériau réduite.

5. Crochet de suspension (10) selon l'une quelconque des revendications 2 à 4, dans laquelle la partie affaiblie (19) est sous forme d'une ligne affaiblie s'étendant transversalement par rapport à la direction longitudinale du crochet de suspension (10).

6. Crochet de suspension (10) selon l'une quelconque des revendications précédentes, dans laquelle la partie de plaque plate (15) est destinée à fonctionner en tant que surface d'impact lors du montage du crochet de suspension (10) sur le panneau de mur (13).

7. Crochet de suspension (10) selon l'une quelconque des revendications précédentes, dans laquelle l'élément de dent du milieu (14B) est plus long que les deux autres éléments de dent latéraux (14A, 14C), l'élément de dent du milieu (14B) fonctionnant en tant que tenon de guidage lors du montage du crochet (10) sur le panneau de mur (13).

8. Crochet de suspension (10) selon l'une quelconque des revendications précédentes, le crochet de suspension étant configuré de sorte que la partie de plaque plate (15) est disposée plus ou moins parallèlement au panneau de mur (13) dans la phase initiale de la procédure d'installation.
